# EUROPÄISCHE PATENTSCHRIFT

(11) **EP 3 429 801 B1**
(45) Veröffentlichungstag und Bekanntmachung des Hinweises auf die Patenterteilung: **24.03.2021**
(21) Anmeldenummer: 17707245.1
(22) Anmeldetag: 23.02.2017
(51) Int. Cl.: B23Q 3/10, F16B 7/18, F16B 7/04

(54) **IN REGELMÄSSIG BEABSTANDETEN POSITIONEN FIXIERBARES GELENK UND BAUTEILGRUPPE MIT EINEM SOLCHEN GELENK**
JOINT THAT IS FIXABLE IN REGULARLY SPACED-APART POSITIONS, AND COMPONENT ASSEMBLY HAVING SUCH A JOINT
ARTICULATION POUVANT ÊTRE FIXÉE À DES POSITIONS ÉQUIDISTANTES ET GROUPE DE COMPOSANTS DOTÉ D'UNE ARTICULATION DE CE TYPE

(30) Priorität: 14.03.2016 DE 202016101401 U
(43) Veröffentlichungstag der Anmeldung: 23.01.2019
(73) Patentinhaber: WITTE BARSKAMP KG, 21354 Bleckede (DE)
(72) Erfinder: WITTE, Andreas, 21335 Lüneburg (DE)
(74) Vertreter: Raffay & Fleck
(86) Internationale Anmeldenummer: PCT/EP2017/054154
(87) Internationale Veröffentlichungsnummer: WO 2017/157630

(56) Entgegenhaltungen:
- WO-A1-01/01034
- WO-A1-2012/109351
- DE-A1- 3 636 639

## Beschreibung

Die vorliegende Erfindung betrifft ein in mehreren nach einer ersten in einer Gelenksbewegungsrichtung gleichen Abstandsschritten unterteilten Positionsteilung wählbaren Gelenksstellungen fixierbares Gelenk mit zwei relativ zueinander verlagerbaren, mit Gelenkflächen aneinander anliegenden Gelenkteilen.

Aus der WO 2012/109351 A1 ist ein in mehreren, nach einer ersten unterteilten Positionsteilung wählbaren Gelenkstellungen einstellbares Gelenk bekannt, welches zwei Gelenkteile und einen Abstandshalter aufweist. Diese zwei Gelenkteile weisen jeweils in unterschiedlichen Abständen eine zweite Positionsteilung bzw. eine dritte Positionsteilung und den Abstandshalter auf, dessen beide gegenüberliegende Seiten die zweite und dritte Positionsteilung aufzeigen, wobei mittels des Abstandshalters das Gelenk in der ersten Positionsteilung einstellbar ist, welche kleiner ist als die zweite und dritte Positionsteilung.

Es ist bekannt, dass für ein Aufspannen von Werkstücken, insbesondere von komplex geformten, dreidimensionalen Werkstücken, wie sie zum Beispiel im Bereich des Automobilbaus in Form von Türen, Kotflügeln, Seitenteilen, Motorhauben, Heckklappen und dergleichen anfallen, entsprechende Aufspannvorrichtungen gebildet werden, um solche Werkstücke insbesondere zum Zwecke einer Vermessung an klar definierten Anlage- bzw. Auflagepunkten aufzuspannen bzw. anzulegen. Solche Aufspannvorrichtungen sind dabei individuell an die Form des aufzuspannenden Werkstücks anzupassen, werden typischerweise aus Einzelelementen in Form von Streben und Platten gerüstartig zusammengesetzt und entsprechend einer den Anlagepunkten im Raum mit Anlagemitteln bzw. Spannelementen bestückt. Beispiele für Systeme für einen solchen modularen Aufbau bzw. daraus gebildete Aufspannvorrichtungen sind in der EP 222 147 A2 und auch in der EP 1 640 621 A1 beschrieben. Die dort gezeigten Baukastensysteme und die daraus gebildeten Vorrichtungen zeichnen sich dadurch aus, dass die einzelnen Elemente des Baukastensystems mit Verbindungsstrukturen, dort in Form von Befestigungsbohrungen, versehen sind, die in einem vorgegebenen Rastermaß auf den Oberflächen der beteiligten Elemente angeordnet und verteilt sind. Durch dieses Rastermaß und die in diesem angeordneten Verbindungstrukturen ist bereits ein hohes Maß an Freiheit gegeben, die einzelnen Elemente relativ zueinander zu positionieren und miteinander zu verbinden. Gleichwohl ist aber durch das Rastermaß eben auch eine dezidierte Rasterung vorgegeben, so dass nicht beliebig nah beieinander liegende Positionen im Raum mit solchen mit in einem Raster angeordneten Verbindungselementen versehenen Bauteilen erreicht werden können.

Entsprechend müssen für die letztendliche Positionierung von Aufspannelementen bzw. Anlagestücken noch weitere Anstrengungen unternommen werden, um ausgehend von einem unter Rückgriff auf die Rasterung durch Zusammenbau der Komponenten des Baukastensystems beim Aufbau der Aufspannvorrichtung erreichten, in der Nähe des zu erreichenden Anlagepunktes liegenden Punkt im Raum den exakten Anlagepunkt mit dem Anlagestück bzw. mit dem Spannelement zu treffen. Im Vorrichtungsbau, bei dem aus den vorbekannten Baukastensystemen entsprechende Aufspannvorrichtungen zusammengefügt werden, werden hierfür häufig speziell für die jeweilige Konstruktion der Aufspannvorrichtung und die zu erreichende Geometrie gefertigte Adapterstücke verwendet. Dies ist allerdings insoweit unbefriedigend, als dass hier ein hoher Aufwand betrieben werden muss für den Aufbau der jeweiligen Vorrichtungen, indem individualisierte Einzelstücke zu konstruieren und zu fertigen sind.

Ein Ansatz, der hier eine Einstellungsmöglichkeit erbringt, ist in einer in der EP 1 080 830 A1 beschriebenen Vorrichtung zur Feineinstellung von Anschlägen zu sehen. Die dort offenbarte Vorrichtung ermöglicht eine axiale Feineinstellung entlang dreier jeweils senkrecht zueinander orientierter Achsen und zusätzlich eine Winkeleinstellung durch gelenkige Ausbildung von Einzelelementen der offenbarten Vorrichtung und deren Verschwenkbarkeit um je eine von zwei zueinander senkrecht stehenden Schwenkachsen. In der in der EP 1 080 830 A1 offenbarten Vorrichtung sind also verschiedene Gelenke realisiert, nämlich Drehgelenke für das Verschwenken der Komponenten sowie Schubgelenke für die axiale Einstellung der beteiligten Komponenten relativ zueinander. Mit einer wie in dieser Schrift offenbarten Vorrichtung ist es insoweit möglich, ausgehend von einem durch Ausnutzung des Rastermaßes an den beteiligten Komponenten erlangten Punkt im Raum, an dem ein dort mit einer Konnektorfläche liegendes Bauelement angeordnet ist, über eine Feinjustierung hinsichtlich axialer Einstellung in Richtung von drei unabhängigen Raumachsen und hinsichtlich einer Winkeleinstellung in Bezug auf die beiden senkrecht zueinander stehenden Schwenkachsen eine genaue Ausrichtung des eigentlichen Anlagepunktes vorzunehmen, die eine deutlich feinere Einstellung erlaubt, als dies mit den gerasterten Bauteilen und einem Zusammenbau einer Vorrichtung aus allein selbigen möglich ist.

Die in der EP 1 080 830 A1 gezeigte Vorrichtung weist jedoch insoweit einen Nachteil auf, als dass sie einerseits nur geringe Freiheitsgrade hinsichtlich einer Winkeleinstellung der beteiligten Drehgelenke ermöglicht, als dass Sie andererseits keine weitergehende Rasterung enthält, so dass eine Einstellung der korrekten Lage des Anlagepunktes allein frei Hand erfolgen muss und nicht ohne Weiteres reproduzierbar ist. Auch ist mit dieser Vorrichtung ein rasterüberbrückender Versatz nicht einstellbar, da die realisierbaren Stellwege eng begrenzt sind.

Hier soll mit der vorliegenden Erfindung angesetzt werden, indem eine insbesondere im Zusammenhang mit Bauelementen bzw. Bauteilgruppen für den Aufbau von Aufspannvorrichtungen für Werkstücke verwendete Gelenkverbindung, bzw. ein solches Gelenk angegeben wird, welches mit einfachen und robusten Mitteln, für den Anwender leicht zu bedienen, eine Einstellung einer Gelenkstellung in einer regelmäßigen Unterteilung mit gleichen, dennoch ausreichend feinen Abstandsschritten ermöglicht.

Diese Aufgabe wird erfindungsgemäß gelöst durch ein Gelenk mit den Merkmalen des Anspruchs 1. Vorteilhafte Weiterbildungen eines solchen Gelenks sind in den abhängigen Ansprüchen 2 bis 9 angegeben. Ein weiterer Aspekt der erfindungsgemäßen Lösung liegt dann in einer Bauteilgruppe für die Verwendung für den Aufbau einer Aufspannvorrichtung für Werkstücke mit den Merkmalen des Anspruchs 10. Bevorzugte Ausgestaltungen einer solchen Bauteilgruppe sind in den abhängigen Ansprüchen 11 bis 15 angegeben.

Nach der Erfindung weist also ein in mehreren nach einer ersten in einer Gelenkbewegungsrichtung gleichen Abstandsschritten unterteilten Positionsteilung wählbaren Gelenkstellungen fixierbares Gelenk zwei relativ zueinander verlagerbare, mit Gelenkflächen aneinander anliegende Gelenkteile auf. Eine an einem ersten Gelenkteil ausgebildete erste Gelenkfläche ist mit einer eine zweite in der Gelenkbewegungsrichtung in gleichen Abstandsschritten unterteilten Positionsteilung versehen, die in der zweiten Positionsteilung verteilte Riegelangriffe schafft. Ein zweites Gelenkteil weist eine zweite Gelenkfläche auf, und an dem zweiten Gelenkteil sind Riegelaufnahmen vorgesehen, die die zweite Gelenkfläche an in einer dritten in in Richtung der Gelenkbewegungsrichtung gleichen Abstandsschritten unterteilten Positionsteilung angeordneten Riegelpositionen durchbrechen. In erfindungswesentlicher Weise sind die zweite und die dritte Positionsteilung jeweils größer als die erste Positionsteilung, die ihrerseits durch den Betrag der Differenz der zweiten und der dritten Positionsteilung bestimmt ist. Ein Verriegelungselement ist schließlich in einer entlang der Gelenkbewegungsrichtung des Gelenks eingenommenen Gelenkstellung wahlweise in eine der Riegelaufnahmen derart einbringbar, dass es von der zu der Riegelaufnahme gehörigen Riegelposition aus in einer solchen Weise an einem in der eingenommenen Gelenkstellung gegenüber der Regelposition platzierten Riegelangriff angreift, dass es das Gelenk in der eingenommenen Gelenkstellung blockiert.

Das erfindungsgemäße Gelenk, bei dem es sich grundsätzlich um ein beliebiges in der breiten technischen Definition eines Gelenks gebildetes Gelenk handeln kann, zum Beispiel ein Drehgelenk oder ein Schubgelenk, verfügt also durch die besondere Wahl der zweiten und der dritten Positionsteilung über eine erste Positionsteilung hinsichtlich der zu fixierenden Gelenksstellungen, die eine sehr feine Positionsteilung sein kann. Ist der Unterschied zwischen der zweiten und der dritten Positionsteilung nur hinreichend gering gewählt, so ergibt sich eine entsprechend kleine bzw. feine erste Positionsteilung, wobei die zweite Positionsteilung und die dritte Positionsteilung dennoch vergleichsweise grob gebildet sein können. Es können also mit anderen Worten entsprechende Strukturen, nämlich einerseits die Strukturierung und andererseits die an den Riegelpositionen die zweite Gelenksfläche durchbrechenden Riegelaufnahmen in einer im Rahmen einer Fertigung und Bearbeitung der beteiligten Gelenkeile gut durchzuführenden Bearbeitung erhältlichen, vergleichsweise groben Positionsteilung hergestellt werden, und es kann dennoch eine sehr feine erste Positionsteilung für die einzelnen separat für eine Blockierung anzusteuernden Gelenkstellungen erzielt werden. So kann z.B. bei einer Realisierung des Gelenks als Drehgelenk die zweite Positionsteilung eine Winkelteilung mit 10°-Schritten sein, kann die dritte Positionsteilung eine Winkelteilung mit 10,5°-Schritten sein, so dass sich als erste Positionsteilung eine Winkelteilung mit 0,5°-Schritten, also eine sehr feine Winkelteilung, ergibt.

An dieser Stelle ist festzuhalten, dass das erfindungsgemäße Gelenk nicht zwangsläufig für eine dauerhafte Benutzung als Gelenk, also mit relativ zu einander beweglichen Gelenkteilen, vorgesehen sein muss. Vielmehr kann das Gelenk auch in einer solchen Weise verwendet werden, dass für eine einmalige Einstellung der Gelenkstellung die Gelenkfunktion ausgenutzt wird, zum Beispiel zwei Gelenkteile relativ zueinander linear verschoben werden (Schubgelenk) oder zwei Gelenkteile relativ zueinander verdreht werden (Drehgelenk), dass dann diese Gelenkstellung fixiert wird durch ein Blockieren der Gelenkteile und Festlegen derselben zueinander in einer wie oben bereits beschriebenen reproduzierbaren Weise. Ein Gelenk im Sinne der Erfindung ist also bereits durch zwei in beliebiger Weise mit einer gewissen Führung relativ zueinander in einer Gelenkbewegungsrichtung relativ zueinander bewegbare Elemente, die die Gelenkteile bilden, umgesetzt. Eine solche Führung kann zum Beispiel durch eine entsprechende Formgebung der Gelenkflächen erreicht werden.

Die Positionsteilungen (erste, zweite und dritte Positionsteilung) können je nach Art des Gelenkes unterschiedlicher Natur sein. Insbesondere sind die Positionsteilung bei Schubgelenken Abstandsteilungen, sind die Positionsteilung bei Drehgelenken Winkelteilungen. Wesentlich dabei ist allein, dass die Positionsteilung in gleichen Abstandschritten erfolgt, d.h. dass benachbarte Positionen jeweils einen gleichen Positionsabstand zueinander einnehmen, zum Beispiel einen gleichen Längenabstand oder eine gleiche Winkeldifferenz.

Die Strukturierung der ersten Gelenkfläche kann beispielsweise durch eine Verzahnung gebildet sein. Bei einer solchen Verzahnung sind dann die Riegelangriffe zum Beispiel gebildet durch jeweils zwischen zwei Zähnen gelegene Zahngründe, deren Abstand das Maß für die zweite Positionsteilung bildet. Alternativ kann die Strukturierung der ersten Gelenksfläche auch durch im Abstand der zweiten Positionsteilung angeordnete, quer zu der ersten Gelenkfläche in das erste Gelenkteil geführte Bohrungen gebildet sein. Auch diese Bohrungen bilden dann entsprechende Riegelangriffe, in die zum Beispiel ein Riegelstift oder dergleichen eingreifen kann.

Die Riegelaufnahmen in dem zweiten Gelenkteil können zum Beispiel durch nach der dritten Positionsteilung in der zweiten Gelenkfläche mündende Bohrungen gebildet sein. Dabei sind die Bohrungen selbst nicht zwangsläufig entsprechend der dritten Positionsteilung relativ zueinander beabstandet. Wesentlich ist, dass die Mündungen der Bohrungen in der zweiten Gelenkfläche einen Abstand gemäß der dritten Positionsteilung aufweisen. Solche in der zweiten Gelenkfläche mündende Bohrungen können das zweite Gelenkteil insbesondere durchragen, so dass von einer auf einer der zweiten Gelenkfläche gegenüberliegenden Seite gelegenen Öffnung der Bohrung in diese ein Verriegelungselement eingebracht werden kann. Ein solches Verriegelungselement kann zum Beispiel ein wie bereits erwähnter Verriegelungsstift, eine selbstschneidende Verriegelungsschraube, oder auch ein erst durch Erhärten bzw. Erstarren eines eingebrachten Materials, wie zum Beispiel eines flüssigen Metalls, eines Kunstharzes oder dergleichen, gebildetes Element sein.

Ist das erfindungsgemäße Gelenk als Drehgelenk gebildet, können die Gelenkflächen insbesondere kreiszylinderförmig oder kreiszylinderabschnittsförmig geformt sein. Dabei kann insbesondere die erste Gelenkfläche eine konvex geformte Gelenkfläche, die zweite Gelenkfläche eine konkav geformte Gelenkfläche sein.

Wie bereits vorstehend erwähnt, betrifft die Erfindung auch eine Bauteilgruppe für die Verwendung für den Aufbau einer Aufspannvorrichtung für Werkstücke. Diese Bauteilgruppe zeichnet sich dadurch aus, dass diese für eine Einstellung und Festlegung einer Orientierung von mit der Bauteilgruppe in der Vorrichtung zu positionierenden Anschlusspunkten ein Gelenk nach der wie vorstehend beschriebenen Bauart aufweist. Mit einer solchen Bauteilgruppe, die z.B. an wenigstens einer Anschlussfläche mit in einem Raster angeordneten Befestigungselementen, wie zum Beispiel Befestigungsbohrungen, versehen sein kann, die aber auch mit einer weiteren erfindungsgemäßen Bauteilgruppe kombiniert werden kann, um weitere Freiheitsgrade der Einstellung zu erhalten, kann nun entsprechend in den feinen Schritten der ersten Positionsteilung die Gelenkstellung eingestellt werden, um so Lage und Orientierung eines Anschlusspunktes im Raum genauer und präziser in klar definierten Schritten einstellen zu können. Ein solcher Anschlusspunkt im Raum kann beispielsweise ein Punkt sein, an dem ein weiteres Zwischenstück, also ein weiteres Element für den Aufbau der Aufspannvorrichtung, angeordnet und festgelegt wird. An dem Anschlusspunkt kann aber auch unmittelbar ein Anlagestück oder ein Spannelement angeordnet sein, welches der Anlage bzw. der spannenden Auflage eines Werkstückes dient.

Eine erfindungsgemäße Bauteilgruppe kann insbesondere die Form eines eine Basis zum Verbinden mit einem Strukturelement der Aufspannvorrichtung und ein Anschlussteil für ein Anlage- oder Spannelement aufweisenden, winkelig einstellbaren Anlagestücks zum Bilden einer Werkstückauflage in der Aufspannvorrichtung aufweisen. Dabei ist dann zwischen der Basis und dem Anschlussteil wenigstens ein als Drehgelenk ausgebildetes Gelenk gemäß dem vorstehend beschriebenen Erfindungsaspekt vorgesehen. Eine solche Bauteilgruppe mit dem Drehgelenk kann insbesondere zwischen der Basis und dem Anschlussteil noch ein Mittelstück aufweisen, das über ein erstes, eine erste Drehachse aufweisendes Drehgelenk gemäß dem vorstehenden Aspekt der Erfindung mit der Basis gekoppelt und über ein zweites, eine zweite, zu der ersten Drehachse senkrecht stehende Drehachse aufweisendes Drehgelenk gemäß dem vorherigen Erfindungsaspekt mit dem Anschlussteil gekoppelt ist. Das erste Drehgelenk kann dabei insbesondere ein um 360° frei drehbar einstellbares Drehgelenk sein, wohingegen das zweite Drehgelenk ein in einem Schwenkwinkelbereich begrenzt drehbar einstellbares Drehgelenk ist. Mit einer solchen Ausgestaltung der erfindungsgemäßen Bauteilgruppe kann eine Winkelorientierung im Raum um eine, insbesondere auch um zwei Drehachsen bzw. Schwenkachsen sehr genau justiert und eingestellt werden.

Eine andere Form einer erfindungsgemäßen Bauteilgruppe sieht vor, dass das zwischen zwei Elementen der Bauteilgruppe, die die Gelenkteile bilden, gebildete Gelenk ein Schubgelenk gemäß dem ersten Erfindungsaspekt ist, wobei über die nach der ersten Abstandsteilung einstellbaren Gelenkspositionen ein linearer Versatz zwischen den beiden Elementen der Bauteilgruppe definierbar ist. Eine solche Ausgestaltung erlaubt eine sehr exakte und in einem feinen Rastermaß einstellbare axiale Positionierung entsprechender Anlagepunkte bzw. Anschlusspunkte im Raum.

Weitere Vorteile und Merkmale der Erfindung ergeben sich aus der nachfolgenden Beschreibung eines Ausführungsbeispiels anhand der beigefügten Figuren. Dabei zeigen:
- Fig. 1: eine Ansicht eines in einem Aufbau einer Aufspannvorrichtung für Werkstücke zu verwendenden Anlageadapters als erstes Beispiel für eine erfindungsgemäße Bauteilgruppe mit darin realisierten erfindungsgemäßen Gelenken;
- Fig. 2: eine Explosionsdarstellung des in Fig. 1 gezeigten Anlageadapters;
- Fig. 3: eine Ansicht einer in einem Aufbau einer Aufspannvorrichtung für Werkstücke zu verwendenden Strebenverbindung als zweites Beispiel für eine erfindungsgemäße Bauteilgruppe mit darin realisierten erfindungsgemäßen Gelenken;
- Fig. 4: eine Explosionsdarstellung der in Fig. 3 gezeigten Strebenverbindung; und
- Fig. 5: eine Explosionsdarstellung einer wie in Fig. 3 gezeigten Strebenverbindung aus einem anderen Blickwinkel.

Nachfolgend werden anhand der beigefügten Figuren Ausführungsbeispiele dargestellt und erläutert, in denen eine erfindungsgemäße Bauteilgruppe realisiert werden kann, die jeweils wenigstens ein erfindungsgemäßes Gelenk aufweist. Die gezeigten Ausführungsbeispiele sind dabei lediglich als eine mögliche Auswahl von Realisierungsformen der Erfindung zu verstehen, wobei die Umsetzung eines erfindungsgemäßen Gelenkes nicht zwingend auf eine Realisierung in einer Bauteilgruppe nach der beschriebenen Art beschränkt ist, weiterhin anders gestaltete Bauteilgruppen gebildet werden können, die ein oder mehrere erfindungsgemäße Gelenke enthalten und daraus Vorteile ziehen.

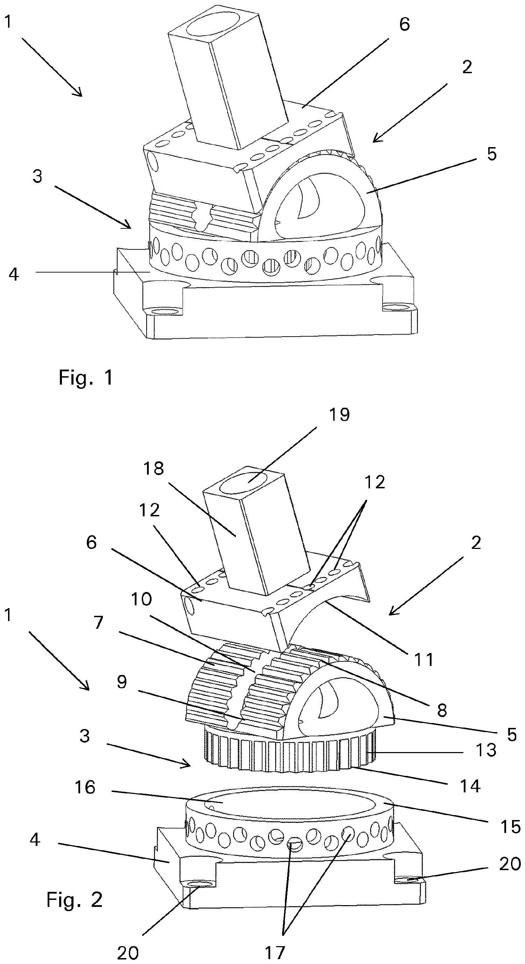

In den Figuren 1 und 2 ist zunächst ein erstes Ausführungsbeispiel für eine erfindungsgemäße Bauteilgruppe mit dort zwei erfindungsgemäß gestalteten Gelenken in Form von Drehgelenken dargestellt. Die dort dargestellte Bauteilgruppe ist als ein Anlageadapter 1 gebildet, der dazu dient, in einer Vorrichtung für das Aufspannen von Werkstücken eine Winkeleinstellung, gegebenenfalls auch eine axiale Einstellung der Position eines Anlage- bzw. Spannpunktes exakt und lagegenau vorzunehmen, um so im Raum den Aufspann- bzw. Anlagepunkt entsprechend den konstruktiven bzw. messtechnischen Vorgaben zu positionieren.

Der Anlageadapter 1 weist insgesamt zwei Gelenke 2 und 3 auf, an denen einzelne Gelenkteile verdreh- bzw. verschwenkbar miteinander verbunden sind. Die Gelenke 2 und 3 sind also Drehgelenke. Der in den Figuren gezeigte Anlageadapter 1 ist insgesamt dreiteiligen gebildet mit einer Basis 4, einem mit der Basis 4 in dem Gelenk 3 verbundenen Mittelstück 5 und einem mit dem Mittelstück 5 in dem Gelenk 2 verbundenen Anschlussteil 6.

Der genaue Aufbau des Anlageadapters 1 ist besonders gut in der Explosionsdarstellung gemäß Figur 2 zu erkennen. Dort ist gut zu sehen, dass das zwischen dem Mittelstück 5 und dem Anschlussteil 6 gebildete Gelenk 2 eine erste Gelenkfläche 7 aufweist, die an dem Mittelstück 5 ausgebildet ist. Diese Gelenkfläche 7 ist teilzylinderförmig gebildet, verläuft entsprechend gemäß dem Umfang eines Teilabschnittes der Mantelfläche eines Kreiszylinders. Diese erste Gelenkfläche 7 des Gelenks 2 ist mit einer Strukturierung versehen, die in Form einer Verzahnung 8 vorliegt. Die Verzahnung 8 bildet Zahngründe 9 aus, die in einer Winkelteilung mit jeweils gleichen Winkelabständen zwischen benachbarten Zahngründen 9 verteilt angeordnet sind. Die Winkelabstände (bezogen auf einen Umfangswinkel ausgehend von einer Mittelachse des Kreiszylinders, auf dessen Mantelfläche die Gelenkfläche 7 liegt) können hier beispielsweise 10° betragen. Die Gelenkfläche 7 ist von einem in Umfangsrichtung der Zylindermantelfläche verlaufenden Schlitz 10 durchbrochen. Die Gelenkfläche 7 ist konvex geformt.

Korrespondierend zu der Gelenkfläche 7 an dem Mittelstück 5 ist an dem Anschlussteil 6 eine komplementär geformte Gelenkfläche 11 gebildet, die entsprechend konkav verläuft. Auch diese ist kreiszylinderabschnittförmig gebildet, also als Abschnitt einer Kreiszylindermantelfläche. In dem Anschlussteil 6 sind Bohrungen 12 vorgesehen, die die Gelenkfläche 11 durchbrechen. Dabei sind die Durchbrechungen der Gelenkfläche 11, in denen die Bohrungen 12 dort münden, ebenfalls in einer gleichmäßigen Winkelteilung angeordnet, bei der entlang der Schwenkrichtung benachbarte Mündungen der Bohrungen 12 einen Winkelabstand aufweisen. Dabei ist an dieser Stelle darauf hinzuweisen, dass - aus Platzgründen - die Bohrungen 12 an zwei einander gegenüberliegenden Seiten des Anschlussteils 6 geführt sind, wobei die Reihe der Bohrungen 12 versetzt zueiner liegen, so dass im Winkelmaß benachbarte Bohrungen 12 immer abwechselnd auf der einen und auf der anderen Seite des Anschlussteils 6 positioniert sind. Mit anderen Worten: Wenn eine erste Bohrung 12 auf einer linken Seite des Anschlussteils 6 gesehen wird, so ist die um einen Winkelversatz nächstgelegene Bohrung 12 auf der rechten Seite des Anschlussteils 6 zu finden, die um den gleichen Winkelversatz weiter gerückte Bohrung 12 wiederum auf der rechten Seite und so weiter. Die Winkelteilung, die durch die Durchbrüche der Bohrungen 12 durch die Gelenkfläche 11 gebildet wird, kann in diesem Beispiel 10,5° betragen.

Das weitere Gelenk 3, welches an der Verbindungsstelle des Mittelstücks 5 mit der Basis 4 gebildet ist, weist eine erste kreiszylinderförmige Gelenkfläche 13 auf, die entlang ihres gesamten Umfanges mit einer Strukturierung in Form einer Verzahnung 14 versehen ist. Auch hier bilden Zahngründe Strukturen, die in einer regelmäßigen Winkelteilung angeordnet und verteilt sind. Auch hier kann der Abstand benachbarter Zahngründe, also die Winkelteilung, 10° betragen. An der Basis 4 ist eine Aufnahme 15 gebildet, die ebenfalls kreiszylinderförmig verläuft. Diese Aufnahme 15 ist begrenzt durch eine Umfangswand, die einem Zylindermantel entspricht. Auf der Innenseite dieses Zylindermantels ist eine Gelenkfläche 16 gebildet, die korrespondierend zu der Gelenkfläche 13 geformt und dimensioniert ist, so dass letztgenannte, wenn das Mittelstück 5 entsprechend mit der Basis 4 verbunden ist, an der Gelenkfläche 16 anliegt. Durch die Wand der Aufnahme 15 sind ebenfalls Bohrungen 17 geführt, die wiederum die Gelenkfläche 16 durchbrechen und dort in einer regelmäßigen Winkelteilung, d.h. mit gleichen Abständen von in Umfangsrichtung benachbarten Bohrungen 17, münden. In Umfangsrichtung benachbarte Bohrungen sind hier - dies wiederum aus Gründen der Platzeinsparung - in der Höhe der Aufnahme 15 jeweils versetzt angeordnet. Dieser Höhenversatz ist jedoch für die Winkelteilung unerheblich und spielt letztlich für die nachfolgend noch zu beschreibende Funktion dieses Gelenkes 3 keine entscheidende Rolle. Auch hier kann zum Beispiel der Winkelabstand benachbarter Bohrungen, d.h. die Winkelteilung, ähnlich wie bei den Bohrungen 12 in dem Anschlussstück 6, 10,5° betragen.

Zu erkennen ist schließlich auch noch ein im Querschnitt quadratischer Zapfen 18, der an dem Anschlussstück 6 angeformt ist. Dieser Zapfen 18 weist eine Aufnahmebohrung 19 auf. Der Zapfen 18 dient der Festlegung eines Anlagestücks bzw. eines Spannelementes, das zum Beispiel mit einer Ringschelle außen an dem Zapfen 18 festgelegt werden kann, das ebenso mit einem entsprechenden Fixierungselement in der Aufnahmebohrung 19 fixiert werden kann. Das Anlagestück bzw. das Spannelement bildet dann den eigentlichen Anlagepunkt, bzw. Spannpunkt aus, an dem ein aufzuspannendes Werkstück angelegt bzw. fixiert wird. Dabei ist der Zapfen 18 in einer solchen Weise in der Länge gestaltet, dass ein daran festzulegendes Anlagestück bzw. Spannelement in der axialen Richtung des Zapfens noch verschoben und damit eine Längeneinstellung erreicht werden kann.

An der Basis 4 sind schließlich Befestigungsbohrungen 20 zu erkennen, die an den vier Eckpunkten durch die Basis 4 hin zu einer Grundfläche derselben geführt sind. Diese Befestigungsbohrungen 20 weisen typischerweise zueinander einen Abstand auf, der einem Rastermaß entspricht, in dem an weiteren Bauteilen, die zum Aufbau einer Vorrichtung für das Aufspannen von Werkstücken verwendet werden, Befestigungsstrukturen vorgesehen sind. So kann die Basis 4 und damit der Anlageadapter 1 an einem solchen Bauteil in einer im Rahmen des Rastermaßes der Befestigungsstrukturen wählbaren Position festgelegt werden.

Die Verwendung des Anlageadapters 1 und die Einstellung der Winkelpositionen zwischen dem Mittelstück 5 und der Basis 4 bzw. zwischen dem Mittelstück 5 und dem Anschlussteil 6 erfolgt nun wie folgt:
Mit dem Gelenk 2 kann eine Neigung des Anschlussstücks 6 gegenüber dem Mittelstück 5 eingestellt werden, indem das Anschlussteil 6 mit der Gelenkfläche 11 auf der Gelenkfläche7 in einer entlang des Umfanges des durch die Gelenkflächen 11 abschnittsweise beschriebenen Kreiszylinders gerichteten Gelenkbewegungsrichtung verschoben bzw. verstellt wird. Durch das Zusammenspiel der Verzahnung 8, genauer deren Zahngründe 9, und den Bohrungen 12, genauer deren Mündungen in der Gelenkfläche 11, kann nun eine in einer Winkelteilung vorgegebene Einstellung des Schwenkwinkels erfolgen. Durch den Unterschied zwischen den beiden Winkelteilungen der Zahngründe 9 auf der einen Seite und der Mündungen der Bohrungen 12 auf der anderen Seite, in dem wie vorstehend beschriebenen Beispiel beträgt dieser Unterschied 0,5°, kann dadurch, dass ein Verriegelungselement, zum Beispiel ein in den Figuren nicht dargestellter Fixierstift, durch eine der Bohrungen 12 geführt wird, bis dieser in einen der Zahngründe eingreift, durch entsprechende Auswahl der Paarung des Zahngrundes 9 und der Bohrung 12 eine Feineinstellung des zu fixierenden Schwenkwinkels in 0,5° Schritten erfolgen, so dass sich ein maximaler Fehler gegenüber ein Sollrichtung zum Anlagepunkt von 0,25° erreichen lässt.

In ähnlicher Weise kann der Drehwinkel des Gelenks 3 zwischen der Basis 4 und dem Mittelstück 5 eingestellt werden, indem auch dort durch das Zusammenspiel der in ihrer Winkelteilung unterschiedlich ausgebildeten Strukturen, der Zahngründe der Verzahnung 14 und der Mündungen der Bohrungen 17 in der Gelenkfläche 16, eine in dem oben genannten Zahlenbeispiel in 0, 5° Schritten wählbare Gelenkposition in gleicher Weise fixiert werden, indem durch eine der Bohrungen 17 ein Verriegelungsmittel, z.B. ein Riegelstift, in einen der Zahngründe der Verzahnung 14 geführt und dort festgelegt wird.

Anstelle eines Stiftes, der sich leicht lösen lässt, können zum Beispiel die Bohrungen 12 bzw. 17 mit einem Innengewinde versehen sein, in die ein Gewindestift eingeschraubt werden kann, der mit einer, insbesondere kegelig spitz geformten, Spitze in einen passenden Zahngrund eingreift und so das jeweilige Gelenk in der eingenommenen Gelenkposition fixiert.

Für eine Fixierung des Anschlussteils 6 an dem Mittelstück 5 kann zudem eine Klemmschraube durch den Schlitz 10 hindurch geführt werden und diese Klemmschraube durch die Befestigungsbohrungen 20 hindurch fest gezogen werden. Weiterhin ist auch die Basis 4 mit dem Mittelstück gegen ein axiales Abheben gesichert Verbunden, bspw. durch eine Verschraubung.

Aus der vorstehenden Beschreibung ist deutlich geworden, dass mit den erfindungsgemäß gebildeten Gelenken 2 und 3 in dem gezeigten Anlageadapter 1 eine sehr feine Winkeljustierung erfolgen kann, in dem Zahlenbeispiel in Winkelschritten von 0,5°, obwohl die Winkelteilungen der beteiligten Strukturen, der Verzahnung 8 bzw. 14 auf der einen Seite und der Bohrungen 12 bzw. 17 auf der anderen Seite, bedeutend grober sind (in dem Zahlenbeispiel 10°, bzw. 10,5°). So kann mit einem universell herstellbaren Element eine sehr feine Winkeleinstellung von Dreh- bzw. Schwenkwinkel der Gelenke 3 bzw. 2 vorgenommen werden, welches Element zugleich keine überhöhten Anforderungen an die Herstellungstechnik stellt, da die jeweiligen Strukturierungen lediglich in einem vergleichsweise groben Raster gefertigt werden müssen.

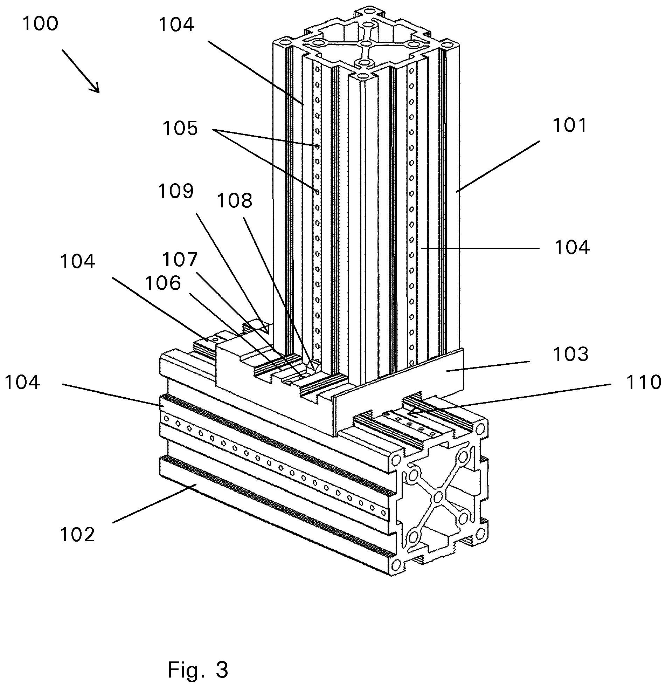

Ein zweites Beispiel für eine erfindungsgemäße Bauteilgruppe, in der erfindungsgemäße Gelenke realisiert sind, ist in den Figuren 3 bis 5 dargestellt. Dort gezeigt ist eine Strebenverbindung 100, in der zwei quaderförmige Streben 101, 102 miteinander über eine Adapterplatte 103 verbunden sind. Dabei weisen die Streben 101, 102 auf ihren vier die Längsseiten begrenzenden Außenflächen jeweils eine in Längsrichtung verlaufende, zentrale Leiste 104 auf, die seitlich jeweils durch eine parallel zu den Leisten 104 verlaufende Nut begrenzt sind. Mittig entlang jeder der Leisten 104 läuft jeweils eine Reihe von Bohrungen 105, die mit jeweils gleichem Abstand zueinander nebeneinander angeordnet sind. Der Abstand zwischen zwei benachbarten Bohrungen 105 gibt hier eine Abstandsteilung vor, sie kann zum Beispiel 10 mm betragen.

Auch die Adapterplatte 103 weist auf zwei einander gegenüberliegenden Hauptflächen jeweils einer Leiste 106 auf, die jeweils durch zwei parallel zu der Leiste 106 verlaufende Nuten begrenzt ist. Zentral auf den Leisten 106 sind in der Adapterplatte 103 ebenfalls in Längsrichtung nebeneinander angeordnete Bohrungen 107 vorgesehen, die wiederum in einem gleichmäßigen Abstand zueinander, das heißt zwischen benachbarten Bohrungen 107, angeordnet sind. Auch hier ist also eine Abstandsteilung gegeben und die Abstandteilung der Bohrungen 107 unterscheidet sich von derjenigen der Bohrungen 105 um eine Differenz Δ. Die Abstandsteilung der Bohrungen 107 kann in diesem Beispiel bei 10,5 mm liegen, so dass die Differenz Δ 0,5 mm beträgt. Die Leisten 106 auf den einander gegenüberliegenden Hauptflächen der Adapterplatte 103 verlaufen um 90° zueinander versetzt.

Zu erkennen ist weiterhin eine Aufsatzspange 108, die an einer Stirnseite 111 auf die Strebe 101 aufgesetzt ist. Auch diese Aufsatzspange 108 hat in ihrer Längsrichtung hintereinander angeordnet Bohrungen 105, die mit derselben Abstandsteilung, d.h. Abstand zu benachbarten Bohrungen 105, platziert sind, wie die Bohrungen 105 in den Streben 101 bzw. 102 in den dortigen Leisten 104. Die Aufsatzspange 108 wird dafür benötigt, um an der Stirnseite 111 der Strebe 101, an der fertigungsbedingt keine Bohrungen 105 eingebracht werden können, entsprechende Strukturen, nämlich Bohrungen 105 in der vorgegebenen Abstandsteilung, zu schaffen.

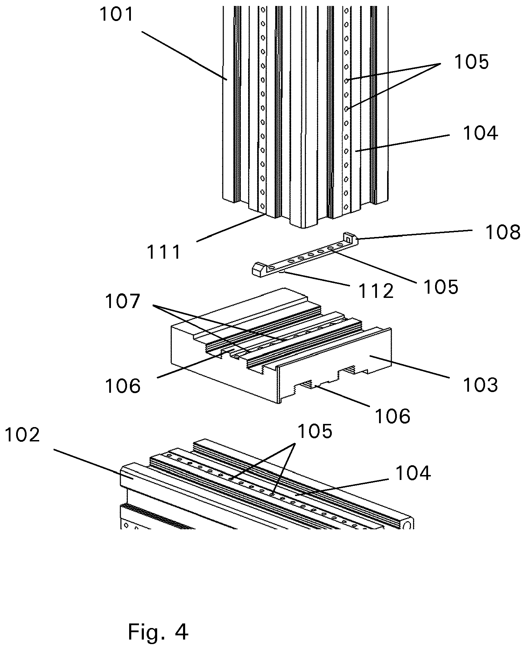

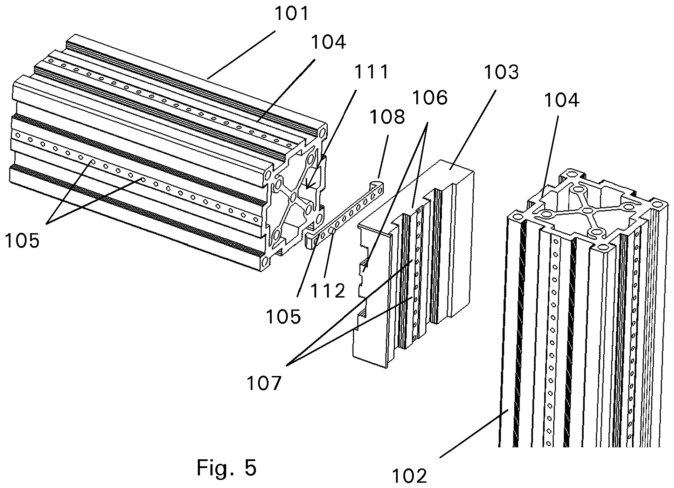

Zwischen der Adapterplatte 103 und der Strebe 101 bzw. der Strebe 104 ist jeweils ein Gelenk 109 bzw. 110 gebildet, wobei diese Gelenke 109, 110 als Schubgelenke realisiert sind. Dabei können die beteiligten Elemente, Streben 101, 102, Adapterplatte 103 und Aufsatzspange 108 mittels eines in den Figuren 4 und 5 angedeuteten Schraubstifts 112, der jeweils in eine Bohrung 105 und in eine zu dieser Bohrung 105 fluchtend positionierte Bohrung 107 eingeschraubt werden kann, miteinander in einer entsprechend eingenommenen Position fest verbunden werden, kann das jeweilige Gelenk 109, 110 entsprechend in der Gelenkstellung festgelegt werden. Aufgrund des Zusammenspiels der in der Abstandsteilung unterschiedlichen Strukturierungen in Form der Bohrungen 105 und 107 ergibt sich so eine Einstellmöglichkeit in Abstandsschritten, die dem Betrag der Differenz Δ zwischen der Abstandsteilung der Bohrungen 105 und der Abstandsteilung der Bogen 107 entsprechen, in dem oben dargelegten Zahlenbeispiel also z.B. 0,5 mm Schritten.

Dadurch, dass die Adapterplatte 103 mit auf den gegenüberliegenden Hauptflächen um 90° zueinander verdrehten Leisten 106 ausgestattet ist, kann so eine Feineinstellung der Strebenverbindung 100 in zwei zueinander senkrechten Raumachsen erfolgen, um so zum Beispiel mit einem freien Stirnende der Strebe 101 einen vorgegebenen Punkt im Raum noch genauer erreichen zu können.

Auch hier lässt sich also erkennen, dass mit der erfindungsgemäßen Ausgestaltung der Gelenke 109, 110 die Möglichkeit einer Feineinstellung gegeben ist, die ausgehend von vergleichsweise groben Abstandsteilungen (in dem ausgeführten Zahlenbeispiel 10 mm bzw. 10,5 mm) eine sehr feine Rasterung von einstellbaren Relativpositionen der beiden Streben 101 und 102 zueinander ermöglicht und damit eine sehr genaue Positionierung zum Beispiel eines Anlagepunktes oder eine Anschlussposition zum Festlegen einer weiteren Strebe oder eines anderen Bauelements im Raum.

### Bezugszeichenliste

- 1: Anlageadapter
- 2: Gelenk
- 3: Gelenk
- 4: Basis
- 5: Mittelstück
- 6: Anschlussteil
- 7: Gelenkfläche
- 8: Verzahnung
- 9: Zahngrund
- 10: Schlitz
- 11: Gelenkfläche
- 12: Bohrung
- 13: Gelenkfläche
- 14: Verzahnung
- 15: Aufnahme
- 16: Gelenkfläche
- 17: Bohrung
- 18: Zapfen
- 19: Aufnahmebohrung
- 20: Befestigungsbohrung
- 100: Strebenverbindung
- 101: Strebe
- 102: Strebe
- 103: Adapterplatte
- 104: Leiste
- 105: Bohrung
- 106: Leiste
- 107: Bohrung
- 108: Aufsatzspange
- 109: Gelenk
- 110: Gelenk
- 111: Stirnseite
- 112: Schraubstift

## Patentansprüche

1. In mehreren nach einer ersten in einer Gelenkbewegungsrichtung in gleichen Abstandsschritten unterteilten Positionsteilung wählbaren Gelenkstellungen fixierbares Gelenk (2, 3; 109, 110) mit zwei relativ zueinander verlagerbaren, mit Gelenkflächen (7, 11; 13, 16; 104, 106) aneinander anliegenden Gelenkteilen (4, 5, 6; 101, 102, 103), wobei eine an einem ersten Gelenkteil (5, 103) ausgebildete erste Gelenkfläche (7, 13, 106) mit einer eine zweite in der Gelenkbewegungsrichtung in gleichen Abstandsschritten unterteilten Positionsteilung aufweisenden Strukturierung (8, 14, 107) versehen ist, die in der zweiten Positionsteilung verteilte Riegelangriffe schafft, wobei ein zweites Gelenkteil (4, 6, 101, 102, 108) eine zweite Gelenkfläche (11, 16, 104) aufweist und an dem zweiten Gelenkteil (4, 6, 101, 102, 108) Riegelaufnahmen (12, 17, 105) vorgesehen sind, die die zweite Gelenkfläche (11, 16, 104) an in einer dritten in in Richtung der Gelenkbewegungsrichtung gleichen Abstandsschritten unterteilten Positionsteilung angeordneten Riegelpositionen durchbrechen, wobei die zweite und die dritte Positionsteilung jeweils größer sind als die erste Positionsteilung, wobei die erste Positionsteilung durch den Betrag der Differenz der zweiten und der dritten Positionsteilung bestimmt ist, wobei in einer entlang der Gelenkbewegungsrichtung des Gelenks (2, 3; 109, 110) eingenommenen Gelenkstellung ein Verriegelungselement (112) wahlweise in eine der Riegelaufnahmen (12, 17, 105) so einbringbar ist, dass es von der zu der Riegelaufnahme (12, 17, 105) gehörigen Riegelposition aus in einer solchen Weise an einem in der eingenommenen Gelenkstellung gegenüber der Riegelposition platzierten Riegelangriff angreift, dass es das Gelenk (2, 3; 109, 110) in der eingenommenen Gelenkstellung blockiert.

2. Gelenk (2, 3; 109, 110) nach Anspruch 1, **dadurch gekennzeichnet, dass** die Strukturierung (8, 14) der ersten Gelenkfläche (7, 13) eine Verzahnung ist.

3. Gelenk (2, 3; 109, 110) nach Anspruch 1, **dadurch gekennzeichnet, dass** die Strukturierung (107) der ersten Gelenkfläche (106) durch nach der zweiten Positionsteilung angeordnete quer zu der ersten Gelenkfläche (106) in das erste Gelenkteil (103) geführte Bohrungen gebildet ist.

4. Gelenk (2, 3; 109, 110) nach einem der vorhergehenden Ansprüche, **dadurch gekennzeichnet, dass** die Riegelaufnahmen (12, 17, 105) durch nach der dritten Positionsteilung in der zweiten Gelenkfläche (11, 16, 104) mündende Bohrungen gebildet sind.

5. Gelenk (2, 3; 109, 110) nach Anspruch 4, **dadurch gekennzeichnet, dass** die in der zweiten Gelenkfläche (11, 16, 104) mündenden Bohrungen das zweite Gelenkteil (4, 6, 101, 102, 108) durchragen.

6. Gelenk (2, 3) nach einem der vorhergehenden Ansprüche, **dadurch gekennzeichnet, dass** es ein Drehgelenk ist, in dem die beiden Gelenkteile (4, 5, 6) um eine Drehachse relativ zueinander verdrehbar sind, und dass die erste, die zweite und die dritte Positionsteilung jeweils eine Winkelteilung ist.

7. Gelenk (2, 3) nach Anspruch 6, **dadurch gekennzeichnet, dass** die Gelenkflächen (7, 11, 13, 16) kreiszylinderförmig oder kreiszylinderabschnittsförmig sind.

8. Gelenk (2, 3) nach Anspruch 7, **dadurch gekennzeichnet, dass** die erste Gelenkfläche (7, 13) eine konvex geformte Gelenkfläche, die zweite Gelenkfläche (11, 16) ein konkav geformte Gelenkfläche ist.

9. Gelenk (109, 110) nach einem der Ansprüche 1 bis 5, **dadurch gekennzeichnet, dass** es ein Schubgelenk ist, in dem die beiden Gelenkteile (101, 102, 103) in einer Gelenkrichtung linear relativ zueinander bewegbar sind, und dass die erste, die zweite und die dritte Positionsteilung jeweils eine Abstandsteilung ist.

10. Bauteilgruppe (1, 100) für die Verwendung für den Aufbau einer Aufspannvorrichtung für Werkstücke **dadurch gekennzeichnet, dass** diese für eine Einstellung und Festlegung einer Orientierung von mit der Bauteilgruppe (1, 100) in der Vorrichtung zu positionierenden Anschlusspunkten ein Gelenk (2, 3; 109, 110) nach einem der vorhergehenden Ansprüche aufweist.

11. Bauteilgruppe (1) nach Anspruch 10, **dadurch gekennzeichnet, dass** diese die Form eines eine Basis (4) zum Verbinden mit einem Strukturelement der Aufspannvorrichtung und ein Anschlussteil (6) für ein Anlage- oder Spannelement aufweisendes, winkelig einstellbaren Anlagestücks zum Bilden einer Werkstückauflage in der Aufspannvorrichtung aufweist, wobei zwischen der Basis (4) und dem Anschlussteil (6) wenigstens ein als Drehgelenk nach einem der Ansprüche 6 bis 8 ausgebildetes Gelenk (2, 3) vorgesehen ist.

12. Bauteilgruppe nach Anspruch 11, **dadurch gekennzeichnet, dass** sie ein zwischen der Basis (4) und dem Anschlussteil (6) angeordnetes Mittelstück (5) aufweist, das über ein erstes, eine erste Drehachse aufweisendes Drehgelenk (3) nach einem der Ansprüche 6 bis 8 mit der Basis (4) gekoppelt und über ein zweites, eine zweite, zu der ersten Drehachse senkrecht stehende Drehachse aufweisendes Drehgelenk (2) nach einem der Ansprüche 6 bis 8 mit dem Anschlussteil (6) gekoppelt ist.

13. Bauteilgruppe nach Anspruch 12, **dadurch gekennzeichnet, dass** das erste Drehgelenk (3) ein um 360° frei drehbar einstellbares Drehgelenk ist.

14. Bauteilgruppe nach einem der Ansprüche 12 oder 13, **dadurch gekennzeichnet, dass** das zweite Drehgelenk (2) ein in einem Schwenkwinkelbereich begrenzt drehbar einstellbares Drehgelenk ist.

15. Bauteilgruppe (100) nach Anspruch 10, **dadurch gekennzeichnet, dass** das zwischen zwei Elementen (101, 102, 103, 108) der Bauteilgruppe, die die Gelenkteile bilden, gebildete Gelenk (109, 110) ein Schubgelenk nach Anspruch 9 ist, wobei über die nach der ersten Abstandsteilung einstellbare Gelenkposition ein linearer Versatz zwischen den beiden Elementen der Bauteilgruppe definiert ist.

## Claims

1. A joint (2, 3; 109, 110) which can be fixed in a plurality of joint positions selectable according to a first position division subdivided in regularly spaced-apart positions in a joint movement direction, having two joint parts (4, 5, 6; 101, 102, 103) which can be displaced relative to one another and bear against one another with joint surfaces (7, 11; 13, 16; 104, 106); 101, 102, 103), wherein a first joint surface (7, 13, 106) formed on a first joint part (5, 103) is provided with a structuring (8, 14, 16; 104, 106) having a second position division subdivided in the joint movement direction in regularly spaced-apart positions, (107) distributed in the second positional division, wherein a second joint part (4, 6, 101, 102, 108) has a second joint surface (11, 16, 104) and bolt receivers (12, 17, 105) are provided on the second joint part (4, 6, 101, 102, 108), which receive the second joint surface (11, 16, 104), 105) are provided, which break through the second joint surface (11, 16, 104) at a third position division arranged in regularly spaced-apart positions in the direction of the joint movement direction, wherein the second and the third position division are each larger than the first position division, wherein the first position division is determined by the amount of the difference of the second and the third position division, wherein, in a position taken along the joint movement direction of the joint (2, 3, 101, 102, 108), the first position division is determined by the amount of the difference of the second and the third position division (2, 3; 109, 110) along the joint movement direction of the joint (2, 3; 109, 110), a locking element (112) being selectively insertable into one of the bolt receptacles (12, 17, 105) in such a manner that it engages, from the bolt position belonging to the bolt receptacle (12, 17, 105), a bolt engagement placed in the assumed joint position opposite the bolt position in such a manner that it locks the joint (2, 3; 109, 110) in the assumed joint position.

2. The joint (2, 3; 109, 110) according to claim 1, **characterised in that** the structuring (8, 14) of the first joint surface (7, 13) is a toothing.

3. The joint (2, 3; 109, 110) according to claim 1, **characterised in that** the structuring (107) of the first joint surface (106) is formed by bores arranged transversely to the first joint surface (106) in the first joint part (103) after the second position division.

4. The joint (2, 3; 109, 110) according to one of the preceding claims, **characterised in that** the latch receivers (12, 17, 105) are formed by bores opening into the second joint surface (11, 16, 104) after the third position division.

5. The joint (2, 3; 109, 110) according to claim 4, **characterised in that** the bores opening into the second joint surface (11, 16, 104) project through the second joint part (4, 6, 101, 102, 108).

6. The joint (2, 3) according to one of the preceding claims, **characterised in that** it is a swivel joint in which the two joint parts (4, 5, 6) are rotatable relative to one another about an axis of rotation, and **in that** the first, second and third position divisions are each an angular division.

7. The joint (2, 3) according to claim 6, **characterised in that** the joint surfaces (7, 11, 13, 16) are circular-cylindrical or circular-cylindrical section-shaped.

8. The joint (2, 3) according to claim 7, **characterised in that** the first joint surface (7, 13) is a convex shaped joint surface, the second joint surface (11, 16) is a concave shaped joint surface.

9. The joint (109, 110) according to any one of claims 1 to 5, **characterised in that** it is a thrust joint in which the two joint parts (101, 102, 103) are linearly movable relative to each other in a joint direction, and **in that** the first, second and third positional pitches are each a spaced pitch.

10. A component assembly (1, 100) for use in the construction of a clamping device for workpieces, **characterised in that** it has a joint (2, 3; 109, 110) according to one of the preceding claims for setting and determining an orientation of connection points to be positioned with the component assembly (1, 100) in the device.

11. The component assembly (1) according to claim 10, **characterised in that** it has the form of an angularly adjustable contact piece having a base (4) for connection to a structural element of the clamping device and a connecting part (6) for a contact or clamping element for forming a workpiece support in the clamping device, at least one joint (2, 3) designed as a swivel joint according to one of claims 6 to 8 being provided between the base (4) and the connecting part (6).

12. The component assembly according to claim 11, **characterised in that** it comprises a central piece (5) arranged between the base (4) and the connection piece (6), which central piece (5) is coupled to the base (4) via a first rotary joint (3) having a first axis of rotation according to one of claims 6 to 8, and is coupled to the connection piece (6) via a second rotary joint (2) having a second axis of rotation perpendicular to the first axis of rotation according to one of claims 6 to 8.

13. The component assembly according to claim 12, **characterised in that** the first swivel joint (3) is a swivel joint which can be freely rotated through 360°.

14. The component assembly according to one of claims 12 or 13, **characterised in that** the second swivel joint (2) is a swivel joint which can be adjusted to a limited degree of rotation in a swivel angle range.

15. The component assembly (100) according to claim 10, **characterised in that** the joint (109, 110) formed between two elements (101, 102, 103, 108) of the component assembly forming the joint parts is a thrust joint according to claim 9, wherein a linear offset between the two elements of the component group is defined via the joint position adjustable according to the first distance division.

## Revendications

1. Articulation (2, 3 ; 109, 110) qui peut être fixée dans plusieurs positions d'articulation sélectionnables selon une première division de position subdivisée à des positions équidistantes dans une direction de mouvement de l'articulation, ayant deux parties d'articulation (4, 5, 6; 101, 102, 103) qui peuvent être déplacées l'une par rapport à l'autre et s'appuient l'une contre l'autre avec des surfaces d'articulation (7, 11; 13, 16; 104, 106), une première surface d'articulation (7, 13, 106) formée sur une première partie d'articulation (5, 103) étant pourvue d'une structuration (8, 14, 16; 104, 106) avec une deuxième répartition de position, qui est divisée dans le sens du mouvement de l'articulation à des positions équidistantes, 107) répartie dans la deuxième répartition de position, une deuxième partie d'articulation (4, 6, 101, 102, 108) présentant une deuxième surface d'articulation (11, 16, 104) et des logements de boulon (12, 17, 105) étant prévus sur la deuxième partie d'articulation (4, 6, 101, 102, 108), qui reçoivent la deuxième surface d'articulation (11, 16, 104), 105), qui traversent la deuxième surface d'articulation (11, 16, 104) à une troisième division de position disposée à des positions équidistantes dans la direction de la direction de mouvement de l'articulation, dans laquelle la deuxième et la troisième division de position sont chacune plus grandes que la première division de position, dans laquelle la première division de position est déterminée par la quantité de la différence de la deuxième et de la troisième division de position, dans laquelle, dans une position prise le long de la direction de mouvement de l'articulation (2, 3, 101, 102, 108), la première division de position est déterminée par la quantité de la différence de la deuxième et de la troisième division de position (2, 3; 109, 110) le long de la direction de mouvement de l'articulation (2, 3; 109, 110), un élément de verrouillage (112) pouvant être inséré de manière sélective dans l'un des réceptacles de boulon (12, 17, 105) de telle sorte qu'il - engage, à partir de la position de boulon appartenant au réceptacle de boulon (12, 17, 105), un engagement de boulon placé dans la position d'articulation supposée opposée à la position de boulon de telle sorte qu'il verrouille l'articulation (2, 3; 109, 110) dans la position d'articulation supposée.

2. Articulation (2, 3; 109, 110) selon la revendication 1, **caractérisée en ce que** la structuration (8, 14) de la première surface articulaire (7, 13) est une denture.

3. Articulation (2, 3; 109, 110) selon la revendication 1, **caractérisé en ce que** la structuration (107) de la première surface de joint (106) est formée par des alésages disposés transversalement à la première surface de joint (106) dans la première partie de joint (103) après la deuxième division de position.

4. Articulation (2, 3; 109, 110) selon l'une des revendications précédentes, **caractérisée en ce que** les récepteurs du verrou (12, 17, 105) sont formés par des alésages s'ouvrant dans la deuxième surface d'articulation (11, 16, 104) après la division de la troisième position.

5. Articulation (2, 3; 109, 110) selon la revendication 4, **caractérisé en ce que** les alésages s'ouvrant dans la deuxième surface de joint (11, 16, 104) font saillie à travers la deuxième partie de joint (4, 6, 101, 102, 108).

6. Articulation (2, 3) selon l'une des revendications précédentes, **caractérisé en ce qu'**il s'agit d'un joint pivotant dans lequel les deux parties du joint (4, 5, 6) peuvent tourner l'une par rapport à l'autre autour d'un axe de rotation, et **en ce que** les première, deuxième et troisième divisions de position sont chacune une division angulaire.

7. Articulation (2, 3) selon la revendication 6, **caractérisé en ce que** les surfaces de joint (7, 11, 13, 16) sont en forme de section circulaire-cylindrique ou circulaire-cylindrique.

8. Articulation (2, 3) selon la revendication 7, **caractérisé en ce que** la première surface de joint (7, 13) est une surface de joint de forme convexe, la deuxième surface de joint (11, 16) est une surface de joint de forme concave.

9. Articulation (109, 110) selon l'une quelconque des revendications 1 à 5, **caractérisée en ce qu'**il s'agit d'une articulation de poussée dans laquelle les deux parties de l'articulation (101, 102, 103) sont mobiles linéairement l'une par rapport à l'autre dans une direction d'articulation, et **en ce que** les premier, deuxième et troisième pas de position sont chacun un pas espacé.

10. Groupe de composants (1, 100) pour utilisation dans la construction d'un dispositif de serrage de pièces, **caractérisé en ce qu'**il présente une articulation (2, 3 ; 109, 110) selon l'une des revendications précédentes pour le réglage et la détermination d'une orientation des points de liaison à positionner avec l'ensemble de composants (1, 100) dans le dispositif.

11. Groupe de composants (1) selon la revendication 10, **caractérisé en ce qu'**il a la forme d'une pièce de contact réglable angulairement avec une base (4) pour la liaison avec un élément de construction du dispositif de serrage et une pièce de liaison (6) pour un élément de contact ou de serrage pour former un support de pièce dans le dispositif de serrage, au moins une articulation (2, 3) conçue comme une articulation pivotante selon l'une des revendications 6 à 8 étant prévue entre la base (4) et la pièce de liaison (6).

12. Groupe de composants selon la revendication 11, **caractérisé en ce qu'**il comprend une pièce centrale (5) disposée entre la base (4) et la pièce de raccordement (6), laquelle pièce centrale (5) est couplée à la base (4) par l'intermédiaire d'un premier joint rotatif (3) ayant un premier axe de rotation selon l'une des revendications 6 à 8, et est couplée à la pièce de raccordement (6) par l'intermédiaire d'un second joint rotatif (2) ayant un second axe de rotation perpendiculaire au premier axe de rotation selon l'une des revendications 6 à 8.

13. Groupe de composants selon la revendication 12, **caractérisé en ce que** la première articulation pivotante (3) est une articulation pivotante qui peut tourner librement sur 360°.

14. Groupe de composants selon l'une des revendications 12 ou 13, **caractérisé en ce que** la deuxième articulation pivotante (2) est une - articulation pivotante qui peut être réglée à un degré de rotation limité dans une plage d'angle de pivotement.

15. Groupe de composants (100) selon la revendication 10, **caractérisé en ce que** le joint (109, 110) formé entre deux éléments (101, 102, 103, 108) du groupe de composants formant les parties de joint est un joint de butée selon la revendication 9, dans lequel un décalage linéaire entre les deux éléments du groupe de composants est défini par la position du joint réglable selon la première division de distance.
